# EUROPEAN PATENT APPLICATION

(11) **EP 4 207 748 A1**
(43) Date of publication of application: **05.07.2023**
(21) Application number: 21896423.7
(22) Date of filing: 18.08.2021
(51) Int. Cl.: H04N 5/765, H04N 21/472

(54) **DATA TRANSMISSION METHOD, ELECTRONIC DEVICE AND COMPUTER-READABLE STORAGE MEDIUM**

(30) Priority: 30.11.2020 CN 202011373056
(71) Applicant: Shenzhen National Engineering Laboratory of Digital Television Co. Ltd., Shenzhen, Guangdong 518063 (CN)
(72) Inventor: LI, Xinguo, Shenzhen, Guangdong 518063 (CN); YU, Xiaolong, Shenzhen, Guangdong 518063 (CN); CHANG, Lin, Shenzhen, Guangdong 518063 (CN); XU, Peiqiu, Shenzhen, Guangdong 518063 (CN); XU, Linyu, Shenzhen, Guangdong 518063 (CN); GONG, Jun, Shenzhen, Guangdong 518063 (CN)
(74) Representative: Oak & Fox
(86) International application number: PCT/CN2021/113200
(87) International publication number: WO 2022/110918

(57) **Abstract**

A data transmission method, an electronic device and a computer-readable storage medium are disclosed, which relate to the field of data transmission. The method is applied to a topological connection, the topological connection including a source node and first-level sub-nodes. The method includes: selecting, according to the source node, a first-level sub-node to which digital content is issued by the source node; establishing an authentication channel between the first-level sub-node and the source node; adjusting a counting parameter of the source node according to the authentication channel, and acquiring an authentication identifier of the first-level sub-node; and issuing the digital content to the first-level sub-node according to the authentication identifier if the adjusted counting parameter is smaller than a preset threshold. According to the present application, the problem that other legal devices cannot receive the data content normally due to excessive devices or illegal devices in the topological connection can be solved.

## Description

### TECHNICAL FIELD

The present application relates to the field of data transmission, in particular to a data transmission method, an electronic device and a computer-readable storage medium.

### BACKGROUND

USB, HDMI, etc., on electronic devices are digital interfaces as compared with analog interfaces adopted in VG data transmission methods, and the existing analog interfaces are basically replaced by digital interfaces. Digital content transmitted over the digital interfaces can easily be intercepted, resulting in piracy, and therefore is usually protected by means of encryption.

The commonly used interface content protection technology is high bandwidth digital content protection (HDCP) technology. HDCP has been widely applied in a high-definition multimedia interface (HDMI), Displayport and other high-speed interfaces. For example, audio and video content is decoded on a set-top box and then outputted to a display through an HDMI for playing. The original content is easily replicated if the transmitted data is not encrypted. The security of the transmission process can be ensured if the content is encrypted by a sending HDMI on the set-top box and then decrypted by a receiving HDMI on the display. Meanwhile, the user can present the content to a larger number of displays through a HDMI device having a relay function, but this number is limited by HDCP. Some other legal devices cannot receive the digital content normally when the number of devices in the topological connection exceeds a preset number threshold or an illegal device appears in the topological connection.

### SUMMARY

The present application aims to solve the technical problems in the existing technology. Therefore, the present application provides a data transmission method that can solve the problem that other legal devices cannot receive digital content normally due to excessive devices or illegal devices in a topological connection.

The present application further provides an electronic device applying the above data transmission method.

The present application further provides a computer-readable storage medium applying the data transmission method.

A data transmission method is provided according to embodiments in a first aspect of the present application, which is applied to a topological connection, the topological connection including a source node and first-level sub-nodes. The method includes: selecting, according to the source node, a first-level sub-node to which digital content is issued by the source node; establishing an authentication channel between the first-level sub-node and the source node; adjusting a counting parameter of the source node and acquiring an authentication identifier of the first-level sub-node according to the authentication channel; and issuing the digital content to the first-level sub-node according to the authentication identifier if the adjusted counting parameter is smaller than a preset threshold.

The data transmission method in the embodiments of the present application at least has the following beneficial effects. The method is applied to a topological connection, the topological connection including a source node and first-level sub-nodes, the method includes: selecting, according to the source node, the first-level sub-node to which digital content is issued by the source node; establishing an authentication channel between the first-level sub-node and the source node; adjusting a counting parameter of the source node according to the authentication channel, and acquiring an authentication identifier of the first-level sub-node; and issuing the digital content to the first-level sub-node according to the authentication identifier if the adjusted counting parameter is smaller than a preset threshold. According to the method of the present application, the problem that other legal devices cannot normally receive the digital content due to excessive devices or illegal devices in the topological connection can be solved.

According to some embodiments of the present application, the topological connection further includes a first-level relay node. The data transmission method further includes: selecting, according to the source node, the first-level relay node to which digital content is issued by the source node; establishing an authentication channel between the first-level relay node and the source node; adjusting the counting parameter of the source node and acquiring an authentication identifier of the first-level relay node according to the authentication channel; and issuing the digital content to the first-level relay node according to the authentication identifier if the adjusted counting parameter is smaller than a preset threshold.

According to some embodiments of the present application, the topological connection includes second-level sub-nodes. The data transmission method further includes: selecting, according to the first-level relay node, a second-level sub-node to which digital content is issued by the first-level relay node; establishing an authentication channel between the second-level sub-node and the first-level relay node; adjusting the counting parameter of the source node according to the authentication channel and acquiring an authentication identifier of the second-level sub-node; and issuing the digital content to the second-level sub-node according to the authentication identifier if the adjusted counting parameter is smaller than the preset threshold.

According to some embodiments of the present application, the step of issuing the digital content to the second-level sub-node according to the authentication identifier if the adjusted counting parameter is smaller than the preset threshold includes: transmitting an acknowledgment instruction to the first-level relay node through the authentication channel if the adjusted counting parameter is smaller than the preset threshold, so that the first-level relay node issues the digital content to the second-level sub-node according to the acknowledgment instruction and the authentication identifier.

According to some embodiments of the present application, the topological connection includes a second-level relay node. The data transmission method further includes: selecting, according to the first-level relay node, the second-level relay node to which digital content is issued by the first-level relay node; establishing an authentication channel between the first-level relay node and the second-level relay node; adjusting the counting parameter of the source node according to the authentication channel and acquiring an authentication identifier of the second-level relay node; and issuing the digital content to the second-level relay node according to the authentication identifier if the adjusted counting parameter is smaller than a preset threshold.

According to some embodiments of the present application, the topological connection further includes third-level sub-nodes. The data transmission method further includes:
selecting, according to the second-level relay node, the third-level sub-node to which digital content is issued by the second-level relay node; establishing an authentication channel between the second-level relay node and the third-level sub-node; adjusting the counting parameter of the source node according to the authentication channel and acquiring an authentication identifier of the third-level sub-node; and issuing the digital content to the third-level sub-node according to the authentication identifier if the adjusted counting parameter is smaller than the preset threshold.

According to some embodiments of the present application, issuing the digital content to the third-level sub-node according to the authentication identifier if the adjusted counting parameter is smaller than the preset threshold includes: transmitting an acknowledgment instruction to the first-level relay node through the authentication channel if the adjusted counting parameter is smaller than the preset threshold; and forwarding the acknowledgment instruction to the second-level relay node through the first-level relay node, so that the second-level relay node issues the digital content to the third-level sub-node according to the acknowledgment instruction and the authentication identifier.

According to some embodiments of the present application, adjusting the counting parameter of the source node includes: recording newly added authentication identifiers in the source node; and adjusting the counting parameter according to the number of the newly added authentication identifiers.

According to some embodiments of the present application, the method further includes: adjusting the counting parameter at the source node when any of subordinate nodes is disconnected from the topological connection.

An electronic device is provided according to embodiments in a second aspect of the present application which includes at least one processor, and a memory that is in communicative connection with the at least one processor, wherein the memory is configured to store an instruction which, when executed by the at least one processor, causes the at least one processor to implement the data transmission method in the first aspect.

The electronic device according to the present application at least has the following beneficial effect. The problem that other legal devices cannot receive digital content normally due to excessive devices or illegal devices in the topological connection can be solved by performing the data transmission method according to embodiments in the first aspect.

A computer-readable storage medium is provided according to embodiments in a fourth aspect of the present application, which is configured to store a computer-executable instruction, which is used to cause the computer to perform the data transmission method in the first aspect.

The computer-readable storage medium of the present application at least has the following beneficial effect. The problem that digital content cannot be received normally due to excessive devices or illegal devices in the topological connection can be solved by performing the data transmission method according to embodiments in the first aspect.

The additional aspects and advantages of the present application will be partially given in the following description, and some will become obvious from the following description, or be learned through the practice of the present application.

### BRIEF DESCRIPTION OF DRAWINGS

FIG. 1 is a first specific application example of a topological connection in a data transmission method according to an embodiment of the present application;
FIG. 2 is a second specific application example of the topological connection in the data transmission method according to an embodiment of the present application;
FIG. 3 is a third specific application example of the topological connection in the data transmission method according to an embodiment of the present application;
FIG. 4 is a first schematic flowchart of the data transmission method according to an embodiment of the present application;
FIG. 5 is a second schematic flowchart of the data transmission method according to an embodiment of the present application;
FIG. 6 is a third schematic flowchart of the data transmission method according to an embodiment of the present application;
FIG. 7 is a fourth schematic flowchart of the data transmission method according to an embodiment of the present application; and
FIG. 8 is a fifth schematic flowchart of the data transmission method according to an embodiment of the present application.

### DETAILED DESCRIPTION

Description will be made in detail to the embodiments of the present application, examples of which are illustrated in the accompanying drawings. The reference numerals which are the same or similar throughout the accompanying drawings represent the same or similar components or components with the same or similar functions. The embodiments described below with reference to the accompanying drawings are exemplary, and are intended to explain the present application, rather than being construed as limitations to the present application.

It should be noted that, unless otherwise specified, the singular forms "a", "the" and "this" used in embodiments are also intended to include multiple forms, unless clearly indicated in the context. Further, unless otherwise defined, all technical and scientific terms used in the present application have the same meaning as commonly understood by a person of ordinary skill in the art. The terms used in the description of the present application herein are only for the purpose of describing specific embodiments, and are not intended to limit the present application. The term "and/or" as used herein includes any and all combinations of one or more related listed items.

USB, HDMI, etc., on electronic devices are digital interfaces as compared with VGA interface and other analog interfaces, and the existing analog interfaces are basically replaced by digital interfaces. Digital content transmitted over digital interfaces can easily be intercepted, resulting in piracy, and therefore is usually protected by means of encryption.

The commonly used interface content protection technology is high bandwidth digital content protection (HDCP) technology. HDCP has been widely applied in a high-definition multimedia interface (HDMI), Displayport and other high-speed interfaces. For example, audio and video content is decoded on a set-top box and then outputted to a display through an HDMI for displaying. The original content is easily replicated if the transmitted data is not encrypted. The security of the transmission process can be ensured if the content is encrypted by a sending HDMI on the set-top box and then decrypted by a receiving HDMI on the display. Meanwhile, the user can present the content to a larger number of displays through an HDMI device having a relay function, but this number is limited by HDCP. Some other legal devices cannot receive the digital content normally when the number of devices in the topological connection exceeds a preset number threshold or an illegal device appears in the topological connection.

Therefore, embodiments of the present application provide a data transmission method, an electronic device and a computer-readable storage medium, which can solve the problem that digital content cannot be received normally due to excessive devices or illegal devices in a topological connection.

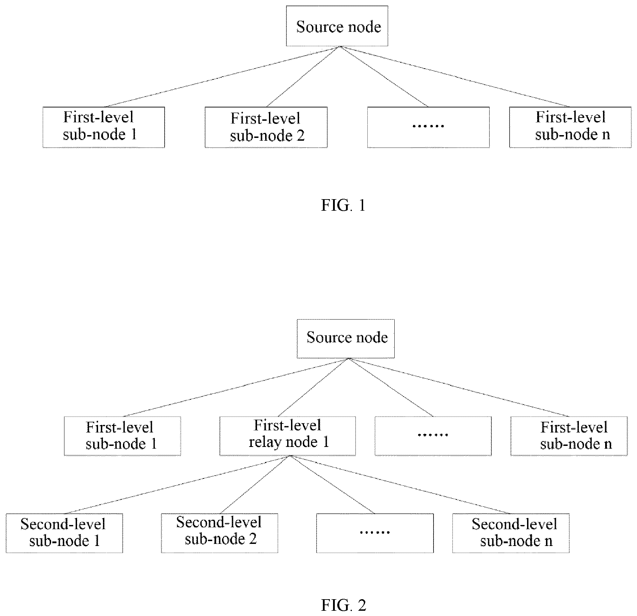

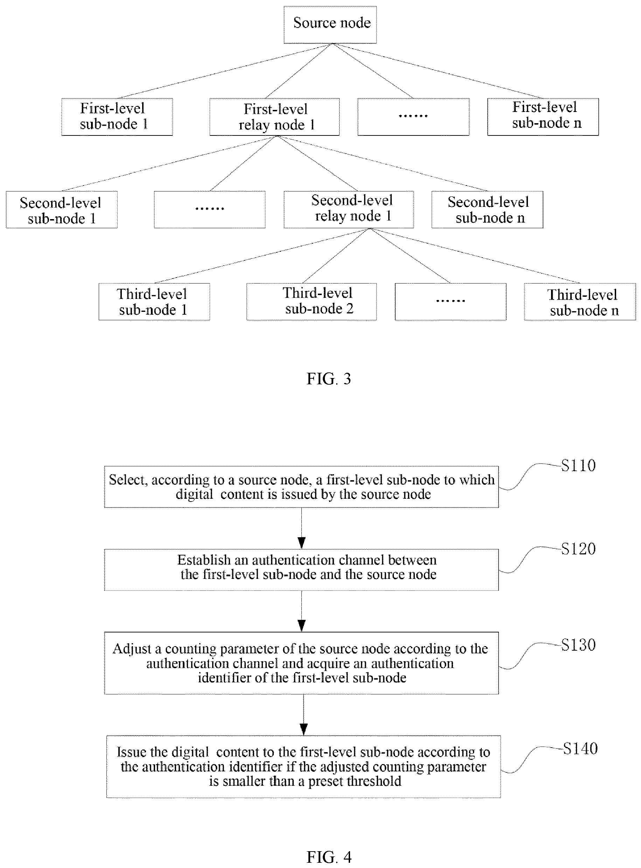

It should be noted that there are a variety of connection cases in the topological connection mentioned in the embodiments of the present application. In the first case, as shown in FIG. 1, the topological connection includes a source node and a plurality of first-level sub-nodes, e.g., a first-level sub-node 1, a first-level sub-node 2,..., a first-level sub-node n. Each node represents a device. For example, the source node represents a source device that issues digital content, and the first-level sub-node represents a first-level sub-device that receives the digital content issued by the source node. In the second case, as shown in FIG. 2, the topological connection includes a source node, a plurality of first-level sub-nodes, a first-level relay node and a plurality of second-level sub-nodes, e.g., a first-level relay node 1, a second-level sub-node 1, a second-level sub-node 2,..., a second-level sub-node n. The second-level sub-node represents a second-level sub-device that receives digital content issued by the source node through the first-level relay node. The first-level relay node is a relay device connected to the source device, and can perform first-level transcoding on the digital content issued by the source device to issue the transcoded digital content to the second-level sub-device. In the third case, as shown in FIG. 3, the topological connection includes a source node, a plurality of first-level sub-nodes, a first-level relay node, a plurality of second-level sub-nodes, a second-level relay node and a plurality of third-level sub-nodes, e.g., a second-level relay node 1, a third-level sub-node 1, a third-level sub-node 2,..., a third-level sub-node n. The third-level sub-node represents a third-level sub-device that receives, through the second-level relay node, the digital content issued by the source node that is transcoded by the first-level relay node. The second-level relay node is a second-level relay device connected to the first-level relay device, and can perform second-level transcoding on the digital content issued by the first-level relay device to issue the transcoded digital content to the third-level sub-device. The continuations performed according to the number of layers of the nodes are all the topological connection mentioned in the present application, which will not be repeated herein. In addition, in the embodiments of the present application, the nodes are discussed as devices, and the first-level sub-node and the source node, the first-level relay node and the source node, the first-level relay node and the second-level sub-node, the second-level relay node and the first-level relay node, the second-level relay node and the third-level sub-node, etc., are all connected through two-way interfaces.

In a first aspect, an embodiment of the present application provides a data transmission method.

In some embodiments, FIG. 4 is a schematic flowchart of the data transmission method according to an embodiment of the present application. When the topological connection includes a source node and a plurality of first-level sub-nodes, i.e., the first case as shown in FIG. 1, the method specifically includes the following steps:
S 110: selecting, according to the source node, a first-level sub-node to which digital content is issued by the source node;
S120: establishing an authentication channel between the first-level sub-node and the source node;
S130: adjusting a counting parameter of the source node according to the authentication channel and acquiring an authentication identifier of the first-level sub-node; and
S140: issuing the digital content to the first-level sub-node according to the authentication identifier if the adjusted counting parameter is smaller than a preset threshold.

In S110, when a user needs to select any first-level sub-node to receive the digital content issued by the source node, the selection can be made by controlling the source node. For example, when the first-level sub-node to be selected is a sub-device sink1, the digital content to be issued is a stream and the source node is a source device src, the user can select the sub-device sink1 through the source device src to play the digital content stream issued by the source device. In practical applications, the sub-node may be selected through control of a human-computer interaction function of the source device, such as through device buttons, device remote control, console, or control interface.

In S120, when the user selects a specific first-level sub-node to receive the digital content issued by the source node, the first-level sub-node will perform authentication negotiation with the source node, and determine the legitimacy of the first-level sub-node through the authentication negotiation, so as to establish an authentication channel. The authentication channel is created based on cryptographic methods. Through the authentication channel, the integrity of information uploaded by a sender can be guaranteed. If the uploaded information is modified, it can be found by a receiver, for example, to ensure the integrity of the information uploaded by the first-level sub-node to the source node. If the information uploaded by the first-level sub-node is modified, it can be found by the source node at the first time. In a possible application example, after the sub-device sink1 performs authentication negotiation with the source device src, an authentication channel is established between sink1 and src, so that the integrity of the information uploaded by the sub-device sink1 is guaranteed and the legitimacy of sink1 can be ensured.

In S130, after the first-level sub-node completes the authentication negotiation with the source node and establishes a secure channel, the counting parameter at the source node will be adjusted according to the number of newly authenticated nodes, and the source node will acquire an authentication identifier of the first-level sub-node, wherein the counting parameter is a corresponding counter used to record the digital content issued by the current source node. The number of devices to which the current digital content has been issued can be known by the counter, so as to strictly control the number of devices to which the digital content can be issued. The authentication identifier is used to record an identity of a receiving device to which the source device has been connected, through which subsequent operations such as addition, deletion, check and modification can be carried out in some application scenarios. A content producer of the digital content also needs to upload the authentication identifiers of all nodes that receive the digital content to a network terminal through the source node. In practical applications, after the sub-device sink1 completes authentication, the source device src will add 1 to the counting parameter, i.e., the counter, corresponding to the digital content stream, and acquires an authentication identifier [sink1-ID] of the sub-device sink1 to generate a corresponding authentication record [sink1-ID]. This authentication record indicates that the first-level sub-device sink1 acquires the digital content issued by the source device src.

In some embodiments, if the authentication negotiation between the first-level sub-node and the source node fails, that is, the authentication channel cannot be established, it is indicated that the sub-device corresponding to the first-level sub-node is an illegal device, and the source node will notify the user that the sub-device corresponding to this node is an illegal device.

In S140, whether the adjusted counting parameter is smaller than the preset threshold is determined; and the digital content of the source node is issued to the corresponding first-level sub-node according to the authentication identifier of the first-level sub-node if the adjusted counting parameter is smaller than the preset threshold. In the process of issuing the digital content, the source node encrypts the digital content through an encryption algorithm and transmits the encrypted digital content to the first-level sub-node; and the first-level sub-node decrypts the digital content after receiving the digital content, and then plays the digital content. The preset threshold refers to the number of legal sub-nodes in the topological connection that are capable of receiving digital content of a source device. For example, if the number threshold of legal sub-nodes that can receive the digital content issued by the source device is set to 32, a newly connected sub-node device cannot receive the digital content normally when the number of the legal sub-nodes in the topological connection exceeds 32.

In the embodiments of the present application, when the topological connection includes first-level sub-nodes, by performing S110 to S140, a first-level sub-device can be selected, and the digital content of the source device is issued to the first-level sub-device for playing, which ensures that the legal first-level sub-device can normally receive and play relevant digital content, and the number of connections of the source device can be counted and controlled.

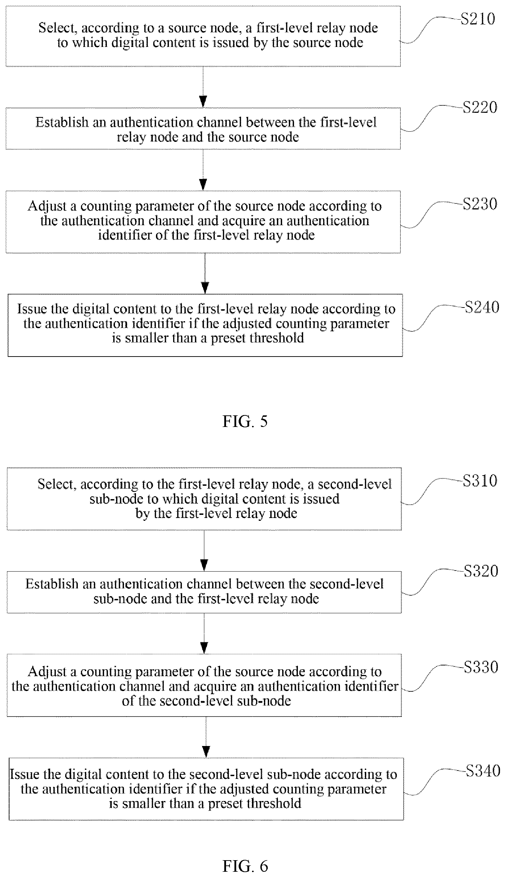

In some embodiments, FIG. 5 is a schematic flowchart of the data transmission method according to an embodiment of the present application. When the topological connection includes a source node, a plurality of first-level sub-nodes, a first-level relay node and a plurality of second-level sub-nodes, i.e., the second case, as shown in FIG. 2, the method specifically includes the following steps:
S210: selecting, according to the source node, a first-level relay node to which digital content is issued by the source node;
S220: establishing an authentication channel between the first-level relay node and the source node;
S230: adjusting a counting parameter of the source node according to the authentication channel and acquiring an authentication identifier of the first-level relay node; and
S240: issuing the digital content to the first-level relay node according to the authentication identifier if the adjusted counting parameter is smaller than a preset threshold.

In S210, when a user needs to select any first-level relay node to receive the digital content issued by the source node, the selection can be made by controlling the source node. For example, when the first-level relay node to be selected is a relay device R1, the digital content to be issued is a stream and the source node is a source device src, the user can select the relay device R1 through the source device src to play the digital content stream issued by the source device. In practical applications, the sub-node may be selected through control of a human-computer interaction function of the source device, such as through device buttons, device remote control, console, or control interface.

In S220, when the user selects a specific first-level relay node to receive the digital content issued by the source node, the first-level relay node will perform authentication negotiation with the source node, and the legitimacy of the first-level relay node is determined through the authentication negotiation, so as to establish an authentication channel. In a possible application example, after the relay device R1 performs authentication negotiation with the source device src, an authentication channel is established between the relay device R1 and the source device src, so that the integrity of the information uploaded by the relay device R1 is guaranteed and the legitimacy of R1 can be ensured.

In S230, after the first-level relay node and the source node complete the authentication negotiation and establish a secure channel, the counting parameter at the source node will be adjusted according to the number of newly authenticated nodes, and the source node acquires an authentication identifier of the first-level relay node. In practical applications, after the relay device R1 completes authentication, the source device src will add 1 to the counting parameter, i.e., the counter, corresponding to the digital content stream, and acquire an authentication identifier [R1-ID] of the relay device R1 to generate a corresponding authentication record [R1-ID]. This authentication record indicates that the first-level relay device R1 acquires the digital content issued by the source device src.

In some embodiments, if the authentication negotiation between the first-level relay node and the source node fails, that is, the authentication channel cannot be established, it is indicated that the relay device corresponding to the first-level relay node is an illegal device, and the source node notifies the user that the relay device corresponding to this node is an illegal device and will not issue the digital content.

In S240, whether the adjusted counting parameter is smaller than the preset threshold is determined; and the digital content of the source node is issued to the corresponding first-level relay node according to the authentication identifier of the first-level relay node if the adjusted counting parameter is smaller than the preset threshold. In the process of issuing the digital content, the source node encrypts the digital content through an encryption algorithm and transmits the encrypted digital content to the first-level relay node; and the first-level relay node decrypts the digital content after receiving the digital content, and then plays the digital content.

In the embodiments of the present application, when the topological connection includes the first-level relay node, by performing S210 to S240, a relay device can be selected, and the digital content of the source device is issued to the relay device for playing, which ensures that the legal first-level relay device can normally receive and play relevant digital content, and the number of connections of the source device can be counted and controlled.

In some embodiments, FIG. 6 is a schematic flowchart of the data transmission method according to an embodiment of the present application. When the topological connection includes a source node, a plurality of first-level sub-nodes, a first-level relay node and a plurality of second-level sub-nodes, i.e., the second case, as shown in FIG. 2, the method specifically includes the following steps:
S310: selecting, according to a first-level relay node, a second-level sub-node to which digital content is issued by the first-level relay node;
S320: establishing an authentication channel between the second-level sub-node and the first-level relay node;
S330: adjusting a counting parameter of the source node according to the authentication channel and acquiring an authentication identifier of the second-level sub-node; and
S340: issuing the digital content to the second-level sub-node according to the authentication identifier if the adjusted counting parameter is smaller than a preset threshold.

In S310, when a user needs to select any second-level sub-node to receive the digital content issued by the source node, the selection can be made by controlling the first-level relay node. For example, the second-level sub-node to be selected is a sub-device sink21 and the digital content to be issued is a stream, wherein the digital content stream refers to digital content issued by the source node that is acquired by the first-level relay node by performing S210 to S240. The source node is the source device src, and specific details in S210 to S240 will not be repeated here. In this case, the user can select the second-level sub-device sink21 through the first-level relay device R1 to play the digital content issued by the source device src that is received by the first-level relay device R1. In practical applications, the sub-node may be selected through control of a human-computer interaction function of the first-level relay device, such as through device buttons, device remote control, console, or control interface.

In S320, when the user selects a specific second-level sub-node to receive the digital content issued by the source node, the first-level relay node will perform authentication negotiation with the second-level sub-node, and the legitimacy of the second-level sub-node is determined through the authentication negotiation, so as to establish an authentication channel. In a possible application example, after the second-level sub-device sink21 performs authentication negotiation with the first-level relay device R1, an authentication channel is established between the second-level sub-device sink21 and the first-level relay device R1, so that the integrity of the information uploaded by the second-level sub-device sink21 is guaranteed and the legitimacy of the second-level sub-device sink21 can be ensured.

In S330, after the first-level relay node and the second-level sub-node complete the authentication negotiation and establish a secure channel, the counting parameter at the source node will be adjusted according to the number of newly authenticated nodes, and the source node acquires an authentication identifier of the second-level sub-node, wherein the first-level relay node transmits the authentication identifier of the first-level relay node and the authentication identifier of the second-level sub-node to the source node through the authentication channel established with the source node; and the source node acquires the corresponding authentication identifier and then generates a corresponding identification record. In practical applications, after the second-level sub-device sink21 completes authentication, the first-level relay device will transmit an authentication identifier [R1-ID] of the first-level relay device and an authentication identifier [sink21-ID] of the second-level sub-device to the source device. The source device src will add 1 to the counting parameter, i.e., the counter, corresponding to the digital content stream, and acquire an authentication identifier of the second-level sub-device sink21 to generate a corresponding authentication record [R1-ID, sink21-ID]. This authentication record indicates that the second-level sub-device sink21 acquires, through the first-level relay device R1, the digital content issued by the source device.

In some embodiments, if the authentication negotiation between the first-level relay node and the second-level sub-node fails, that is, the authentication channel between the first-level relay node and the second-level sub-node cannot be established, it is indicated that the second-level sub-device corresponding to the second-level sub-node is an illegal device, and the source node notifies the user that the second-level sub-device corresponding to this node is an illegal device and will not issue the digital content.

In S340, whether the adjusted counting parameter is smaller than the preset threshold is determined; and the digital content in the first-level relay node is issued to the corresponding second-level sub-node according to the authentication identifier of the second-level sub-node if the adjusted counting parameter is smaller than the preset threshold. The digital content is from the source node. In S210 to S240, in the process of issuing the digital content, the source node encrypts the digital content through an encryption algorithm and then transmits the encrypted digital content to the first-level relay node; and the first-level relay node decrypts the digital content after receiving the digital content, and then transcodes the content. After the first-level relay node completes the transcoding, S340 is performed, the transcoded digital content is encrypted and transmitted to the second-level sub-node, and the second-level sub-node receives the encrypted digital content, decrypts the digital content, and then plays the issued digital content. The transcoding, which refers to a function owned by the first-level relay device, can change the received original digital content. For example, digital content with a 4K resolution is converted to digital content with a 2K resolution, so that the second-level sub-node can play the digital content normally.

In some embodiments, S340 specifically includes: transmitting, by the source node, an acknowledgment instruction to the first-level relay node through the authentication channel established with the first-level relay node if the adjusted counting parameter is smaller than the preset threshold, so that the first-level relay node can encrypt the transcoded digital content and transmit it to the second-level sub-node according to the received acknowledgement instruction and the authentication identifier of the second-level sub-node, and the second-level sub-node decrypts and then plays the digital content. The acknowledgment instruction is used for the source node to inform the first-level relay node that the counting parameter has been acknowledged currently as not exceeding the preset threshold and the digital content can be issued.

In the embodiments of the present application, when the topological connection includes second-level sub-nodes, by performing S210 to S240, a first-level relay device can be selected, and the digital content of the source device is issued to the first-level relay device; and by performing S310 to S340, a second-level sub-device can be selected, and the digital content in the first-level relay device is issued to the second-level sub-device, which ensures that the legal second-level sub-device can normally receive and play relevant digital content, and the number of connections of the source device can be counted and controlled.

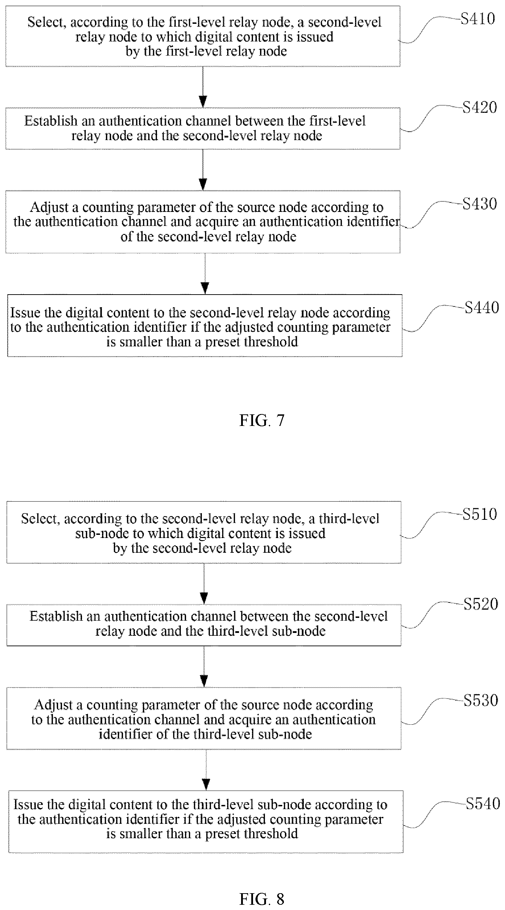

In some embodiments, FIG. 7 is a schematic flowchart of the data transmission method according to an embodiment of the present application. When the topological connection includes a source node, a plurality of first-level sub-nodes, a first-level relay node, a plurality of second-level sub-nodes and a second-level relay node, i.e., the third case, as shown in FIG. 3, the method specifically includes the following steps:
S410: selecting, according to a first-level relay node, a second-level relay node to which digital content is issued by the first-level relay node;
S420: establishing an authentication channel between the first-level relay node and the second-level relay node;
S430: adjusting a counting parameter of the source node according to the authentication channel and acquiring an authentication identifier of the second-level relay node; and
S440: issuing the digital content to the second-level relay node according to the authentication identifier if the adjusted counting parameter is smaller than a preset threshold.

In S410, when a user needs to select any second-level relay node to receive the digital content issued by the source node, the selection can be made by controlling the first-level relay node. For example, the second-level relay node to be selected is a second-level relay device R2 and the digital content to be issued is a stream, wherein the digital content stream refers to digital content issued by the source node that is acquired by the first-level relay node by performing S210 to S240. The source node is the source device src, and specific details of S210 to S240 will not be repeated here. In this case, the user needs to perform S210 to S240 in advance so that the first-level relay device R1 acquires the digital content issued by the source device src. Then, the second-level relay device R2 can be selected through the first-level relay device R1 to play the digital content stream issued by the source device src, which is received by the first-level relay device R1. In practical applications, the sub-node may be selected through control of a human-computer interaction function of the first-level relay device, such as through device buttons, device remote control, console, or control interface.

In S420, when the user selects a specific second-level relay node to receive the digital content issued by the source node, the first-level relay node will perform authentication negotiation with the second-level relay node, and the legitimacy of the second-level relay node is determined through the authentication negotiation, so as to establish an authentication channel. In a possible application example, after the second-level relay device R2 performs authentication negotiation with the first-level relay device R1, an authentication channel is established between the second-level relay device R2 and the first-level relay device R1, so that the integrity of the information uploaded by the second-level relay device R2 is guaranteed and the legitimacy of the second-level relay device R2 can be ensured.

In S430, after the first-level relay node and the second-level relay node complete the authentication negotiation and establish a secure channel, the counting parameter at the source node will be adjusted according to the number of newly authenticated nodes, and the source node acquires an authentication identifier of the second-level relay node, wherein the first-level relay node transmits the authentication identifier of the first-level relay node and the authentication identifier of the second-level relay node to the source node through the authentication channel established with the source node; and the source node acquires the corresponding authentication identifier and then generates a corresponding identification record. In practical applications, after the second-level relay device R2 completes authentication, the first-level relay device transmits an authentication identifier [R1-ID] of the first-level relay device and an authentication identifier [R2-ID] of the second-level relay device to the source device. The source device src will add 1 to the counting parameter, i.e., the counter, corresponding to the digital content stream, and acquire an authentication identifier of the second-level relay device R2 to generate a corresponding authentication record [R1-ID, R2-ID]. This authentication record indicates that the second-level relay device R2 acquires, through the first-level relay device R1, the digital content issued by the source device.

In some embodiments, if the authentication negotiation between the first-level relay node and the second-level relay node fails, that is, the authentication channel between the first-level relay node and the second-level relay node cannot be established, it is indicated that the second-level relay device corresponding to the second-level relay node is an illegal device, and the source node notifies the user that the second-level relay device corresponding to this node is an illegal device and will not issue the digital content.

In S440, whether the adjusted counting parameter is smaller than the preset threshold is determined; and the digital content in the first-level relay node is issued to the corresponding second-level relay node according to the authentication identifier of the second-level relay node if the adjusted counting parameter is smaller than the preset threshold. The digital content is from the source node. In S210 to S240, in the process of issuing the digital content, the source node encrypts the digital content through an encryption algorithm and then transmits the encrypted digital content to the first-level relay node; and the first-level relay node decrypts the digital content after receiving the digital content, and then transcodes the content. After the first-level relay node completes the transcoding, S440 is performed, the transcoded digital content is encrypted and transmitted to the second-level relay node, and the second-level relay node receives the encrypted digital content, decrypts the digital content, and then plays the issued digital content.

In some embodiments, S440 specifically includes: transmitting, by the source node, an acknowledgment instruction to the first-level relay node through the authentication channel established with the first-level relay node if the adjusted counting parameter is smaller than the preset threshold, so that the first-level relay node can encrypt the transcoded digital content and transmit it to the second-level relay node according to the received acknowledgement instruction and the authentication identifier of the second-level relay node, and the second-level relay node decrypts and then plays the digital content. The acknowledgment instruction is used for the source node to inform the first-level relay node that the counting parameter has been acknowledged currently as not exceeding the preset threshold and the digital content can be issued.

In the embodiments of the present application, when the topological connection includes a second-level relay node, by performing S210 to S240, a first-level relay device can be selected, and the digital content of the source device is issued to the first-level relay device; and by performing S410 to S440, a second-level relay device can be selected, and the digital content in the first-level relay device is issued to the second-level relay device, which ensures that the legal second-level relay device can normally receive and play relevant digital content, and the number of connections of the source device can be counted and controlled.

In some embodiments, FIG. 8 is a schematic flowchart of the data transmission method according to an embodiment of the present application. When the topological connection includes a source node, a plurality of first-level sub-nodes, a first-level relay node, a plurality of second-level sub-nodes, a second-level relay node and a plurality of third-level sub-nodes, i.e., the third case, as shown in FIG. 3, the method specifically includes the following steps:
S510: selecting, according to the second-level relay node, a third-level sub-node to which digital content is issued by the second-level relay node;
S520: establishing an authentication channel between the second-level relay node and the third-level sub-node;
S530: adjusting a counting parameter of the source node according to the authentication channel and acquiring an authentication identifier of the third-level sub-node; and
S540: issuing the digital content to the third-level sub-node according to the authentication identifier if the adjusted counting parameter is smaller than a preset threshold.

In S510, when a user needs to select any third-level sub-node to receive the digital content issued by the source node, the selection can be made by controlling the second-level relay node. For example, the third-level sub-node to be selected is a third-level sub-device sink31 and the digital content to be issued is a stream, wherein the digital content stream refers to digital content issued by the first-level relay node that is acquired by the second-level relay node by performing S410 to S440. The digital content issued by the first-level relay node is from the source node, where the source node is the source device src, and specific details of S410 to S440 will not be repeated here. In this case, the user needs to perform S210 to S240 and S410 to S440 in advance so that the first-level relay device R1 acquires the digital content issued by the source device src. Then, the second-level relay device R2 can be selected through the first-level relay device R1, such that the second-level relay device R2 can receive the digital content stream issued by the first-level relay device R1. Finally, the third-level sub-device sink31 is selected by the second-level relay device R2 to issue the digital content thereto. In practical applications, the sub-node can be selected through control of a human-computer interaction function of the second-level relay device, such as through device buttons, device remote control, console, or control interface. S410 to S240 and S410 to S440 are not repeated in the embodiments of the present application.

In S520, when the user selects a specific third-level sub-node to receive the digital content issued by the source node, the third-level sub-node will perform authentication negotiation with the second-level relay node, and the legitimacy of the third-level sub-node is determined through the authentication negotiation, so as to establish an authentication channel. In a possible application example, after the third-level sub-device sink31 performs authentication negotiation with the second-level relay device R2, an authentication channel is established between the third-level sub-device sink31 and the second-level relay device R2, so that the integrity of the information uploaded by the third-level sub-device sink31 is guaranteed and the legitimacy of the third-level sub-device sink31 can be ensured.

In S530, after the third-level sub-node and the second-level relay node complete the authentication negotiation and establish a secure channel, the counting parameter at the source node will be adjusted according to the number of newly authenticated nodes, and the source node acquires an authentication identifier of the third-level sub-node, wherein the second-level relay node transmits the authentication identifier of the third-level sub-node to the first-level relay node through the authentication channel established with the first-level relay node; the first-level relay node may transmit the authentication identifier of the first-level relay node, the authentication identifier of the second-level relay node and the authentication identifier of the third-level sub-node to the source node through the authentication channel established with the source node; and the source node acquires the corresponding authentication identifier and then generates a corresponding identification record. In practical applications, after the third-level sub-device sink31 completes authentication, the second-level relay device R2 transmits an authentication identifier [sink31-ID] of the third-level sub-device and an authentication identifier [R2-ID] of the second-level relay device R2 to the first-level relay device R1, and the first-level relay device R1 transmits the authentication identifier [sink31-ID] of the third-level sub-device sink31, the authentication identifier [R2-ID] of the second-level relay device R2 and the authentication identifier [R1-ID] of the first-level relay device R1 to the source device src. The source device src will add 1 to the counting parameter, i.e., the counter, corresponding to the digital content stream, and acquires the corresponding authentication identifier to generate a corresponding authentication record [R1-ID, R2-ID, sink31-ID]. This authentication record indicates that the third-level sub-device sink31 acquires, through the second-level relay device R2 and then the first-level relay device R1, the digital content issued by the source device.

In some embodiments, if the authentication negotiation between the third-level sub-node and the second-level relay node fails, that is, the authentication channel between the third-level sub-node and the second-level relay node cannot be established, it is indicated that the third-level sub-device corresponding to the third-level sub-node is an illegal device, and the source node will notify the user that the third-level sub-device corresponding to this node is an illegal device and will not issue the digital content.

In S540, whether the adjusted counting parameter is smaller than the preset threshold is determined; and the digital content in the second-level relay node is issued to the corresponding third-level sub-node according to the authentication identifier of the third-level sub-node if the adjusted counting parameter is smaller than the preset threshold. The digital content is issued from the first-level relay node, and the digital content issued by the first-level relay node is issued from the source node. In S210 to S240, in the process of issuing the digital content, the source node encrypts the digital content through an encryption algorithm and then transmits the encrypted digital content to the first-level relay node; and the first-level relay node decrypts the digital content after receiving the digital content, and then transcodes the content. After the first-level relay node completes the transcoding, the transcoded digital content is encrypted and transmitted to the second-level relay node, and the second-level relay node receives the encrypted digital content and performs secondary transcoding on the digital content. S540 is performed after the second-level relay node completes the transcoding of the digital content, and the digital content is encrypted and then transmitted to the third-level sub-node, which then decrypts and plays the digital content.

In some embodiments, S540 specifically includes: transmitting, by the source node, an acknowledgment instruction to the first-level relay node through the authentication channel established with the first-level relay node if the adjusted counting parameter is smaller than the preset threshold; transmitting, by the first-level relay node, the acknowledgment instruction to the second-level relay node through the authentication channel established with the second-level relay node, so that the second-level relay node can encrypt the transcoded digital content and transmit it to the third-level sub-node according to the received acknowledgment instruction and the authentication identifier of the third-level sub-node, and the third-level sub-node decrypts and then plays the digital content. The acknowledgment instruction is used for the source node to inform the second-level relay node that the counting parameter has been currently acknowledged not exceeding the preset threshold and the digital content can be issued.

In the embodiments of the present application, when the topological connection includes a third-level sub-node, by performing S210 to S240, a first-level relay device can be selected, and the digital content of the source device is issued to the first-level relay device; by performing S410 to S440, a second-level relay device can be selected, and the digital content in the first-level relay device is issued to the second-level relay device; and finally, by performing S510 to S540, a third-level sub-device can be selected, and the digital content of the second-level relay device is issued to the third-level sub-device, which ensures that the legal third-level sub-device can normally receive and play relevant digital content, and the number of connections of the source device can be counted and controlled.

In some embodiments, when the adjusted counting parameter is greater than a preset threshold, it is indicated that the current number of connected devices has exceeded the maximum number and the source node will notify the user that the maximum number of connections has been exceeded and the digital content cannot be issued normally. For example, when the counting parameter 'counter' of the source device src reaches 32, it is indicated that 32 sub-devices have been connected to the current source device, which has exceeded the number limit. At this time, the source node src will notify the user that the maximum number of connections has been exceeded and the digital content cannot be issued normally.

In some embodiments, the step of adjusting the counting parameter at the source node specifically includes: recording newly added authentication identifiers at the source node, and adjusting the counting parameter according to the number of the newly added authentication identifiers. For example, an authentication identifier of a first-level relay device, i.e. [sink1-ID], is recorded in the source device when the newly added authentication identifier is the authentication identifier of the first-level sub-device sink1, and the counting parameter of the source device is added by 1 according to the newly added authentication identifier of the first-level sub-device sink1. An authentication identifier of a first-level relay device, i.e. [R1-ID], is recorded in the source device when the newly added authentication identifier is the authentication identifier of the first-level relay device R1, and the counting parameter of the source device is added by 1 according to the newly added authentication identifier of the first-level relay device R1. An authentication identifier of a second-level sub-device sink21, i.e. [R1-ID, sink21], is recorded in the source device when the newly added authentication identifier is the authentication identifier of the second-level sub-device sink21, and the counting parameter of the source device is added by 1 according to the newly added authentication identifier of the second-level sub-device sink21. An authentication identifier of a second-level relay device, i.e. [R1-ID, R2-ID], is recorded in the source device when the newly added authentication identifier is the authentication identifier of the second-level relay device R2, and the counting parameter of the source device is added by 1 according to the newly added authentication identifier of the second-level relay device R2. An authentication identifier of a third-level sub-device sink31, i.e. [R1-ID, R2-ID, sink31], is recorded in the source device when the newly added authentication identifier is the authentication identifier of the third-level sub-device sink31, and the counting parameter of the source device is added by 1 according to the newly added authentication identifier of the third-level sub-device sink31. By adding an authentication identifier to adjust the counting parameter, the number of device connections in the current topological connection can be controlled strictly, to prevent the problem that other legal devices cannot receive the digital content normally since the number of connections exceeds a maximum number of connections.

In some embodiments, when any subordinate node is disconnected from the topological connection in the embodiments of the present application, the source node will adjust the counting parameter at the source node according to the corresponding subordinate node. In a possible application example, when any subordinate node (i.e., a downstream device of the source node) is disconnected from the topological connection, the source node will adjust the counting parameter (i.e., the number of connections) corresponding to the corresponding digital content. For example, the number of connections is reduced by 1 when one first-level sub-device is disconnected. When one first-level relay device is disconnected, the number of connections at the source node is adjusted based on the number of downstream devices to which the relay device is connected. For example, when there are three downstream devices (i.e., three second-level sub-devices) of the first-level relay device, the number of connections at the source node is reduced by 4 when the first-level relay device is disconnected, including the disconnection of three second-level sub-devices and one first-level relay device, and so on. The source node can adjust the counting parameter in real time by acquiring the connection status of each node device in the topological connection, which can strictly control the number of device connections in the current topological connection.

In the second aspect, an embodiment of the present application further provides an electronic device. The electronic device includes at least one processor, and a memory in communicative connection with the at least one processor.

The processor is configured to perform the data transmission method according to embodiments in the first aspect by calling a computer program stored in the memory.

The memory, as a non-transient computer-readable storage medium, may be configured to store a non-transient software program and a non-transient computer-executable program, e.g., the data transmission method according to embodiments in the first aspect of the present application. The processor is configured to perform the data transmission method according to embodiments in the first aspect by running the non-transient software program and instruction stored in the memory.

The memory may include a program storage area and a data storage area. The program storage area may store application programs required by an operating system and at least one function. The data storage area may store a program that can perform the data transmission method according to embodiments in the first aspect. In addition, the memory may include a high-speed random access memory, and may further include a non-transient memory, such as at least one magnetic disk storage device, a flash memory device, or other non-transient solid-state storage devices. In some implementations, the memory may optionally include a memory remotely provided with respect to the processor. These remote memories may be connected to the terminal via a network. Examples of the networks include, but are not limited to, the Internet, intranet, local area network, mobile communication network, and combinations thereof.

The non-transient software program and instruction required to implement the data transmission method according to embodiments in the first aspect are stored in the memory, and when executed by one or more processors, perform the data transmission method according to embodiments in the first aspect.

In a third aspect, an embodiment of the present application further provides a computer-readable storage medium. The computer-readable storage medium stores a computer-executable instruction, wherein the computer-executable instruction is used to perform the data transmission method according to embodiments in the first aspect.

In some embodiments, the computer-readable storage medium stores a computer-executable instruction, wherein the computer-executable instruction is performed by one or more control processors. For example, the computer-executable instruction is performed by one processor in the electronic device according to embodiments in the second aspect, such that the one or more processors perform the data transmission method according to embodiments in the first aspect.

The device embodiments described above are merely illustrative, wherein the units described as separate components may or may not be physically separated, i.e., may be located in one place, or may also be distributed on a plurality of network units. Part or all of the modules can be selected according to actual needs to achieve the object of the solution of the embodiments of the present application.

It is understood by those of ordinary skills in the art that all or some of the steps in the methods, and systems disclosed herein can be implemented as software, firmware, hardware or appropriate combinations thereof. Some physical components or all physical components can be implemented as software executed by a processor, such as a central processing unit, a digital signal processor, or a microprocessor, or as hardware, or as an integrated circuit, such as an application specific integrated circuit. Such software may be distributed on the computer-readable medium, which may include a computer storage medium (or non-transient medium) and a communication medium (or transient medium). As is well known to those of ordinary skills in the art, the term "computer storage medium" includes volatile and nonvolatile, removable and non-removable medium implemented by any method or technology for storing the information, such as, computer readable instructions, data structures, program modules or other data. The computer-readable storage medium includes, but is not limited to an RAM, an ROM, a flash memory or other memory techniques, a CD-ROM, a digital video disk (DVD) or other optical storage, a tape cartridge, a magnetic tape, a disk storage or other magnetic storage devices, or any other medium that may be configured to store desired information and may be accessed by a computer. In addition, as is well known to those of ordinary skills in the art, communication medium usually contains computer-readable instructions, data structures, computer program modules, or other data in a modulated data signal such as a carrier wave or other transmission mechanism, and may include any information delivery medium.

In the description of the present application, the description with reference to the terms such as "some embodiments", "an example", "a specific example" and "some examples" refers to that particular features or characteristics described in combination of the embodiments or examples are included in at least one embodiment or example of the present application. In the description, schematic description of the above terms does not necessarily refer to the same embodiment or example.

Although the embodiments of the present application have been shown and described, for a person of ordinary skill in the art, it will be understood that various changes, modifications, substitutions and variations can be made to these embodiments, without departing from the principle and gist of the present application. The protection scope of the present application is defined by the appended claims and their equivalents.

## Claims

1. A data transmission method, which is applied to a topological connection, the topological connection comprising a source node and first-level sub-nodes, the method comprising:
selecting, according to the source node, a first-level sub-node to which digital content is issued by the source node;
establishing an authentication channel between the first-level sub-node and the source node;
adjusting a counting parameter of the source node according to the authentication channel and acquiring an authentication identifier of the first-level sub-node; and
issuing the digital content to the first-level sub-node according to the authentication identifier if the adjusted counting parameter is smaller than a preset threshold.

2. The data transmission method of claim 1, wherein the topological connection further comprises a first-level relay node, the data transmission method further comprising:
selecting, according to the source node, the first-level relay node to which the digital content is issued by the source node;
establishing an authentication channel between the first-level relay node and the source node;
adjusting the counting parameter of the source node according to the authentication channel and acquiring an authentication identifier of the first-level relay node; and
issuing the digital content to the first-level relay node according to the authentication identifier if the adjusted counting parameter is smaller than the preset threshold.

3. The data transmission method of claim 2, wherein the topological connection further comprises second-level sub-nodes, the data transmission method further comprising:
selecting, according to the first-level relay node, a second-level sub-node to which the digital content is issued by the first-level relay node;
establishing an authentication channel between the second-level sub-node and the first-level relay node;
adjusting the counting parameter of the source node according to the authentication channel and acquiring an authentication identifier of the second-level sub-node; and
issuing the digital content to the second-level sub-node according to the authentication identifier if the adjusted counting parameter is smaller than the preset threshold.

4. The data transmission method of claim 3, wherein issuing the digital content to the second-level sub-node according to the authentication identifier if the adjusted counting parameter is smaller than the preset threshold comprises:
transmitting, by the source node, an acknowledgment instruction to the first-level relay node through the authentication channel if the adjusted counting parameter is smaller than the preset threshold, so that the first-level relay node issues the digital content to the second-level sub-node according to the acknowledgment instruction and the authentication identifier.

5. The data transmission method of claim 4, wherein the topological connection further comprises a second-level relay node, the data transmission method further comprising:
selecting, according to the first-level relay node, the second-level relay node to which the digital content is issued by the first-level relay node;
establishing an authentication channel between the first-level relay node and the second-level relay node;
adjusting the counting parameter of the source node according to the authentication channel and acquiring an authentication identifier of the second-level relay node; and
issuing the digital content to the second-level relay node according to the authentication identifier if the adjusted counting parameter is smaller than the preset threshold.

6. The data transmission method of claim 5, wherein the topological connection further comprises third-level sub-nodes, the data transmission method further comprising:
selecting, according to the second-level relay node, a third-level sub-node to which the digital content is issued by the second-level relay node;
establishing an authentication channel between the second-level relay node and the third-level sub-node;
adjusting the counting parameter of the source node according to the authentication channel and acquiring an authentication identifier of the third-level sub-node; and
issuing the digital content to the third-level sub-node according to the authentication identifier if the adjusted counting parameter is smaller than the preset threshold.

7. The data transmission method of claim 6, wherein issuing the digital content to the third-level sub-node according to the authentication identifier if the adjusted counting parameter is smaller than the preset threshold comprises:
transmitting, by the source node, an acknowledgment instruction to the first-level relay node through the authentication channel if the adjusted counting parameter is smaller than the preset threshold; and
forwarding the acknowledgment instruction to the second-level relay node through the first-level relay node, so that the second-level relay node issues the digital content to the third-level sub-node according to the acknowledgment instruction and the authentication identifier.

8. The data transmission method of any one of claims 1 to 7, further comprising:
adjusting the counting parameter at the source node when any of subordinate nodes is disconnected from the topological connection.

9. An electronic device, comprising:
at least one processor; and
a memory in communicative connection with the at least one processor, wherein:
the memory is configured to store an instruction which, when executed by the at least one processor, causes the at least one processor to perform the data transmission method of any one of claims 1 to 8.

10. A computer-readable storage medium, storing a computer-executable instruction, which is used to cause the computer to perform the data transmission method of any one of claims 1 to 8.
